# EUROPEAN PATENT SPECIFICATION

(11) **EP 4 534 857 B1**
(45) Date of publication and mention of the grant of the patent: **29.07.2026**
(21) Application number: 24204820.5
(22) Date of filing: 04.10.2024
(51) Int. Cl.: F16B 1/00, F16B 33/06

(54) **FASTENERS, FASTENING SYSTEMS AND ASSOCIATED ASSEMBLED STRUCTURES AND METHODS**
BEFESTIGUNGSELEMENTE, BEFESTIGUNGSSYSTEME UND ZUGEHÖRIGE MONTIERTE STRUKTUREN UND VERFAHREN
FIXATIONS, SYSTÈMES DE FIXATION ET STRUCTURES ASSEMBLÉES ASSOCIÉES ET PROCÉDÉS

(30) Priority: 05.10.2023 US 202363542548 P; 15.03.2024 US 202418606032
(43) Date of publication of application: 09.04.2025
(73) Proprietor: The Boeing Company, Arlington, VA 22202 (US)
(72) Inventor: SISCO, Farahnaz, Arlington, 22202 (US); MUNTZ, Nathan A., Arlington, 22202 (US); SIMPSON, Blake A., Arlington, 22202 (US)
(74) Representative: Boult Wade Tennant LLP

(56) References cited:
- US-B1- 8 186 924
- ANONYMOUS: "ND Color Code - Fastener head marking for identification", 1 June 2023 (2023-06-01), pages 1 - 3, XP093248350, Retrieved from the Internet <URL:https://web.archive.org/web/20230601032656/https://www.ndindustries.com/products/assembly-aids/nd-color-code/#sds-tds-pds>
- ANONYMOUS: "Fastener Identification Markings - Portland Bolt", 2 April 2023 (2023-04-02), pages 1 - 4, XP093248245, Retrieved from the Internet <URL:https://web.archive.org/web/20230402054528/https://www.portlandbolt.com/technical/fastener-identification-markings/>
- BUMM13: "Color difference - Wikipedia", 29 May 2023 (2023-05-29), Wikipedia.org, pages 1 - 9, XP093248327, Retrieved from the Internet <URL:https://en.wikipedia.org/w/index.php?title=Color_difference&oldid=1157581918>

## Description

### FIELD

The present description relates to the field of fasteners and methods for manufacturing thereof, and systems and methods for facilitating the correct use of fasteners.

### BACKGROUND

Fasteners, including bolts, screws, nuts, rivets, washers, pins, are essential components used in the assembly and maintenance of aircraft. They are used to secure various parts and components together, ensuring the structural integrity and safety of the aircraft. Given the critical role of fasteners in aircraft construction and operation, it is imperative that the right type of fastener is used for each specific application.

The aviation industry employs a wide variety of fasteners, each designed for specific applications and to meet specific performance requirements. These fasteners can vary in terms of size, shape, material composition, and other characteristics. For example, some fasteners may be made of steel, while others may be made of aluminum, titanium, or other specialized alloys. Washers, which are typically used as spacers or to distribute load, are also important fasteners that can be made of similar materials. The choice of material is often dictated by factors such as weight, strength, corrosion resistance, and temperature tolerance.

Despite the diversity of fasteners used in the aviation industry, many fasteners have similar appearances, which can create challenges to ensure that the right fastener is used for each application. For instance, two screws may look nearly identical but may be made of different materials or have different mechanical properties. The aviation industry recognizes the importance of addressing this challenge, as using the correct fastener contributes to the structural integrity of the aircraft and enhances the safety of passengers and crew.

To address this challenge, the aviation industry has implemented various inspection methods to verify the correct use of fasteners. Traditional inspection methods, such as visual inspection or manual measurement, have been effective in many cases. However, the sheer number of fasteners used in an aircraft, along with the subtle differences between fasteners, can make comprehensive inspection a time-consuming and labor-intensive process.

Therefore, there is a need for an improved system and method for ensuring the correct use of fasteners, including washers, in the aviation industry. Such a system and method should be capable of accurately identifying fasteners and ensuring that the right fastener is used for each specific application, thereby enhancing the safety and reliability of aircraft.

Accordingly, those skilled in the art continue with research and development in the field of systems and methods for ensuring the correct use of fasteners.

Anonymous: "ND Color Code - Fastener head marking for identification", 1 June 2023 (2023-06-01), pages 1-3, URL: https://web.archive.org/web/20230601032656/https://www.ndindustries.com/products/assembly-aids/nd-color-code/#sds-tds-pds, in accordance with its overview, states that it relates to special processing equipment for applying paint, dye or ink in virtually any color to the heads or tips of fasteners. The section "How it works" states that "color-coding parts makes it easy to identify specific characteristics, such as: locking or non-locking, right or left-hand thread, sealing or non-sealing, unusual dimensions, size, material, and more".

Anonymous: "Fastener Identification Markings - Portland Bolt", 2 April 2023 (2023-04-02), pages 1-4, URL: https://web.archive.org/web/20230402054528/https://www.portlandbolt.com/technical/fastener-identification-markings/ states that it relates to fastener identification markings.

US 8 186 924 B1, in accordance with its abstract, states that it relates to a fastener assembly comprising a first cylindrical member disposed within a second cylindrical member. One is movable relative to the other one in a first direction, and locked in a second direction opposite to the first direction. A spring is operably attached to the members to urge the one in the first direction. The members include opposing first and second cylindrical walls, respectively. A resilient member is disposed between the walls. One of the walls includes a first receiving volume configured to fully receive the resilient member and the other wall a plurality of second receiving volumes configured to only partially receive the resilient member. The resilient member is shifted between the first and second receiving volumes such that the one can move in the first direction but locked in the second direction; and the first and second receiving volumes are configured such that the resilient member is captured within a locking volume formed between the first volume and an opposing second volume when the first and second cylindrical members are locked together, the locking volume having an entrance opening that prevents the resilient member from shifting out of the locking volume and into the first receiving volume. Paragraph [0031] states that "The fastener assembly may be color coded to indicate travel or stroke length, capacity of useable force or load, and/or inside or outside diameter of the inner cylinder."

### SUMMARY

Disclosed are various fastening systems. The disclosed fastening system includes a plurality of groups of fasteners. Each group includes a plurality of identical fasteners. Each fastener includes a fastener body and a coating applied to at least a portion of the fastener body. The coating includes a binder and a colorant. Each group of fasteners has a specific structural characteristic that differs between the groups, and each group of fasteners has a distinct color represented by a set of CIE Lab coordinates (L, a, b). The colors of each group of fasteners have a vibrancy represented by a chroma value (C) greater than a predetermined minimum chroma threshold (CT) in a CIE LCH color space, wherein the chroma value (C) is calculated using formula C = sqrt(a² + b²), where a and b are the CIE Lab coordinates of the color, wherein CT is 40.

Also disclosed herein but not claimed are methods for producing a fastening system. In some examples, the disclosed method for producing a fastening system includes the steps of: providing a plurality of groups of fasteners, each group comprising a plurality of identical fasteners, wherein each group of fasteners has a specific structural characteristic that differs between the groups; and applying a coating comprising a binder and a colorant to each group of fasteners, wherein the coating for each group of fasteners has a distinct color represented by a set of CIE Lab coordinates (L, a, b).

Also disclosed are assembled structures. The disclosed assembled structure includes a plurality of components and a plurality of groups of fasteners securing the plurality of components together within the assembled structure. Each group includes a plurality of identical fasteners. Each fastener includes a fastener body and a coating applied to at least a portion of the fastener body. The coating includes a binder and a colorant. Each group of fasteners has a specific structural characteristic that differs between the groups, and each group of fasteners has a distinct color represented by a set of CIE Lab coordinates (L, a, b). The colors of each group of fasteners have a vibrancy represented by a chroma value (C) greater than a predetermined minimum chroma threshold (CT) in a CIE LCH color space, wherein the chroma value (C) is calculated using formula C = sqrt(a² + b²), where a and b are the CIE Lab coordinates of the color, wherein CT is 40.

Also disclosed are methods for assembling a structure. The disclosed method for assembling a structure includes: providing a plurality of components to be assembled into the structure; selecting a plurality of groups of fasteners, each group comprising a plurality of identical fasteners, wherein each group of fasteners has a specific structural characteristic that differs between the groups, and wherein each group of fasteners has a distinct color represented by a set of CIE Lab coordinates (L, a, b); and securing the plurality of components together using fasteners from the selected groups of fasteners to form the assembled structure. The colors of each group of fasteners have a vibrancy represented by a chroma value (C) greater than a predetermined minimum chroma threshold (CT) in a CIE LCH color space, wherein the chroma value (C) is calculated using formula C = sqrt(a² + b²), where a and b are the CIE Lab coordinates of the color, wherein CT is 40.

Also disclosed herein but not claimed are fasteners. In some examples, the disclosed fastener includes a fastener body; and a coating applied to at least a portion of the fastener body, the coating comprising: a pigment having a surface layer of at least one of a colored material and a luminescent material; and a binder.

Also disclosed herein but not claimed are methods for manufacturing a fastener. In some examples, the disclosed method for manufacturing a fastener, the method comprising: mixing a pigment having a surface layer of at least one of a colored material and a luminescent material with a binder to form a coating; applying the coating to at least a portion of a fastener body; and curing the coating on the fastener body to form a coated fastener.

Other examples of the disclosed fastening systems, assembled structures, fasteners, and methods will become apparent from the following detailed description, the accompanying drawings and the appended claims.

### BRIEF DESCRIPTION OF THE DRAWINGS

Fig. 1 is an illustration of an exemplary fastening system of the present description.
Fig. 2 is an illustration of exemplary structure of an exemplary fastener of the exemplary fastening system of Fig. 1.
Fig. 3 is an illustration of an exemplary assembled structure of the present description.
Fig. 4 is a flow diagram illustrating a method for producing a fastening system.
Fig. 5 is a flow diagram illustrating a method for assembling a structure.
Fig. 6 is an illustration of a fastener of the present description.
Fig. 7 is a flow diagram illustrating a method for manufacturing a fastener of the present description.

### DETAILED DESCRIPTION

The present description relates to a fastening system comprising a plurality of groups of fasteners, each group comprising a plurality of identical fasteners, each fastener comprising: a fastener body; and a coating applied to at least a portion of the fastener body, the coating comprising a binder and a colorant, wherein each group of fasteners has a specific structural characteristic that differs between the groups, and wherein each group of fasteners has a distinct color represented by a set of CIE Lab coordinates (L, a, b). The colors of each group of fasteners have a vibrancy represented by a chroma value (C) greater than a predetermined minimum chroma threshold (CT) in a CIE LCH color space, wherein the chroma value (C) is calculated using formula C = sqrt(a² + b²), where a and b are the CIE Lab coordinates of the color, wherein CT is 40.

The fasteners of the present description may be of various types suitable for a wide range of applications, particularly in the context of aircraft assembly and maintenance. This can include but is not limited to bolts, screws, nuts, rivets, washers, and pins, amongst others. Bolts, which often work in conjunction with nuts, can include a wide variety of types such as hex bolts, carriage bolts, flange bolts, eye bolts, or plow bolts. They are typically used to hold materials or parts together in a secure fashion, potentially under high stress or vibrational conditions, which is often encountered in the aviation industry. Screws are another type of fastener used widely in aircraft assembly. They may be self-threading or require pre-drilled holes, and they can include types such as machine screws, wood screws, sheet metal screws, or set screws. Different types of screws can be used based on the materials being fastened together and the specific application requirements. Nuts, generally used with bolts, may include various types like hex nuts, lock nuts, wing nuts, flange nuts, or cap nuts. They serve to provide a secure and typically removable fastening, which is important for aircraft maintenance and part replacements. Rivets, which are used to create permanent joints, play an important role in aircraft construction. They may include solid rivets, semi-tubular rivets, blind rivets, or structural rivets. Rivets may be used in joining together aircraft skin, and for other applications where a high-strength, permanent joint is required. Washers play an important role in distributing load in a fastener assembly. They may include plain washers, spring washers, lock washers, or fender washers. Pins, like cotter pins, dowel pins, spring pins, or taper pins, serve a variety of purposes in fastening and alignment applications, including securing parts in place and ensuring correct alignment of components.

The fastening system in the present description includes multiple groups of fasteners, at least a first and a second group, but potentially more groups such as a third, fourth, fifth, and so on. Within each group, all the fasteners are structurally identical to each other, both in terms of their structural attributes and their appearance. However, when compared to another group, the fasteners exhibit structural differences. Despite these differences, the groups of fasteners may appear similar, substantially similar or even identical, which underlines the advantages of a differentiation method like the one presented in this description. All the groups may consist of the same type of fastener, such as bolts, screws, nuts, rivets, washers, or pins, among others.

Each group of fasteners has a specific structural characteristic that differentiates it from the other groups. This characteristic may relate to a subtle shape difference between the groups. The shape difference can include a variety of shape difference depending on the type of fastener. Potential subtle shape differences that can distinguish between different groups of fasteners include the following examples. The following examples provided below may vary based on the specific type of fastener under consideration (such as bolts, screws, nuts, rivets, washers, or pins).

Head Styles: One difference in fasteners can be the head style. For screws, this could mean a difference between flat head, button head, pan head, truss head, and many others. Even small changes in the shape of the head (like a slightly rounded edge versus a sharper edge) can alter the functionality and application of the fastener.

Drive Types: Drive types, such as slotted, Phillips, square, hex, star (Torx), or Pozidriv can also vary subtly among fasteners.

End Types: Differences can be present at the ends of fasteners, such as a flat end versus a pointed end for screws, or chamfered ends for bolts.

Thread Profiles: The thread profile could vary slightly among fasteners, with differences in pitch (distance between threads), angle, depth, or the shape of the thread (e.g., rounded versus trapezoidal).

Under Head Features: For screws and bolts, there could be subtle differences in the features under the head, like the presence of a washer face or the type of locking feature (e.g., a nylon patch versus a deformed thread).

Body Diameter: Small differences in the diameter of the fastener body could differentiate one group from another.

Length: Slight differences in length of the fasteners can categorize them into separate groups.

Presence or Absence of a Shoulder: In bolts, the presence or absence of a shoulder or the slight variations in the shoulder length can create groups of fasteners with different structural characteristics.

Groove Styles: For certain fasteners like pins, different styles of grooves like spiral grooves, straight grooves, or diamond-shaped grooves can provide differentiation.

Chamfer Styles: The chamfer at the beginning of the thread can have different styles and lengths. For example, some fasteners might have an elliptical chamfer while others might have a reverse angle chamfer.

Knurling: The pattern of knurling on a fastener, if present, could also be a distinctive structural characteristic. Some might have a straight knurling pattern while others might have a diamond or spiral knurling pattern.

These are just a few examples of potential structural differences. The actual differences may be dictated by specific requirements of the application, the materials being fastened, and the tools used for fastening. These shape differences may not be immediately apparent at first glance, resulting in a similar overall appearance across the groups of fasteners.

Alternatively, the structural characteristic that differentiate the groups may relate to a non-shape structural difference. The non-shape difference can include a variety of non-shape difference depending on the type of fastener. Potential non-shape differences that can distinguish between different groups of fasteners include the following examples. These examples provided below may vary based on the specific type of fastener under consideration (such as bolts, screws, nuts, rivets, washers, or pins).

Material Composition: Fasteners can be made from a wide range of materials, each with distinct properties. These can include metals, non-metals, or composites. For example, a group of fasteners might be made of stainless steel for its excellent corrosion resistance, while another might be made of titanium for its superior strength-to-weight ratio. A third group could be composed of aluminum, prized for its balance of lightness, strength, and corrosion resistance. A fourth group might use brass, chosen for its superior electrical conductivity. Other potential materials include copper (known for its electrical conductivity and resistance to corrosion), nickel alloys (for their heat resistance and durability), monel (a nickel-copper alloy recognized for its strength and corrosion resistance), Inconel (a superalloy noted for its resistance to extreme environments), Hastelloy (a corrosion-resistant superalloy), molybdenum (for its high melting point and good thermal and electrical conductivity), and tantalum (resistant to corrosion and a high melting point). Despite these differences in material composition, fasteners from different groups can often have similar appearances, increasing the chance of confusion or misapplication. Therefore, a clear and distinct color-coding system can be an invaluable solution in reducing such risks. In addition to these metallic materials, non-metallic materials like plastic, fiberglass, carbon fiber composites, or ceramics, may be employed in the manufacture of specific fasteners like washers to provide properties like insulation, sealing, vibration damping, or lightness.

Heat Treatment: Even if fasteners are made of the same material, they can receive different heat treatments which can significantly change their hardness, toughness, and tensile strength. This is a common practice for steel fasteners.

Surface Treatment or Coating: Fasteners may have different surface treatments or coatings for increased corrosion resistance, reduced friction, or better adhesion. For example, one group of fasteners may have a phosphate coating while another group might have a black oxide finish. Both treatments result in a dark, blackish-grey finish that may be easily confused. However, the phosphate coating typically provides superior corrosion resistance and better paint and oil adhesion compared to the black oxide finish.

Magnetic Properties: Some fasteners might be magnetized or demagnetized based on their application requirements.

Thread Locking Features: Some fasteners may have a thread-locking compound pre-applied to the threads. There can be differences in the type of thread-locking compound used (e.g., a permanent type versus a removable type).

Tensile Strength: Even if fasteners have the same shape and material, differences in their manufacture may result in different tensile strengths. One group might be made to withstand higher pulling forces than another group.

Yield Strength: Similarly, the yield strength, or the stress at which a fastener begins to deform plastically, can differ between groups of fasteners.

Torque Rating: Different groups of fasteners might be rated for different torques, i.e., the twisting force they can withstand without failure.

Weight: Different groups of fasteners might have subtle differences in their weight due to variations in their density or the way they are manufactured.

Electrical Conductivity: Fasteners can have different levels of electrical conductivity based on their material composition and treatment.

Thermal Properties: Fasteners might have different thermal properties such as their heat capacity, thermal conductivity, or coefficient of thermal expansion.

These non-shape structural characteristics may not be readily apparent just by looking at the fasteners. However, they can have significant impacts on the functionality and suitability of a fastener for a particular application.

The present description relates to a coating on each fastener of each group of fasteners. Thus, the fasteners of the present description include a fastener body and a coating applied to at least a portion of the fastener body. The coating includes a binder and a colorant.

The binder in the coating serves a role as the component that physically adheres to the fastener body and may impart other properties to the coating such as durability, flexibility, and corrosion resistance. It also acts as the matrix that holds the colorant and other potential ingredients together and allows them to be applied uniformly onto the fastener body.

The binder could be constituted of various materials depending on the desired properties of the coating. The choice of binder could be influenced by several factors including the environment in which the fastener will be used, the type of metal or other material constituting the fastener body, the required durability of the coating, and potential regulatory or safety considerations.

The binder selection is broad, encompassing traditional materials like phenolic and urethane, as well as alternatives such as epoxy-based binders and sol-gel binders. Each type of binder may offer its own benefits. For example, epoxy-based binders may be capable of presenting more vibrant colors, which aids the distinctiveness of the color-coding system.

Epoxy-based binders have a set of properties that may contribute to more vibrant colors. These properties relate to how epoxy resins interact with color pigments and how they cure. Epoxy resins are known for their excellent compatibility with a wide range of pigments. This compatibility may allow for the pigment particles to be evenly dispersed throughout the binder matrix, which can enhance color vibrancy. Once cured, epoxy coatings typically have a high gloss finish. This glossiness may significantly enhance color vibrancy because it increases the light reflectance of the surface, making the color appear more intense or "vivid". Epoxy resins are usually clear and transparent, which means they do not alter or dull the color of the pigments. This transparency helps maintain the intensity and vibrancy of the pigments. Epoxy coatings are highly durable and resistant to environmental conditions, chemicals, and UV light. This durability helps preserve the vibrancy of the color over time by preventing fading or discoloration. Epoxy binders are not the only binders that provide these benefits. Other binders may offer similar features and can be selected based on the specific requirements of the application. Alternatives include, for example, acrylic binders, polyurethane binders, alkyd binders, polyester binders, and sol-gel binders. Like epoxy, acrylic binders are clear, which may allow for good color vibrancy. They have excellent UV resistance, and they dry quickly to a tough, flexible finish that adheres well to many substrates. However, they may not provide the same level of chemical resistance as epoxy. Polyurethane binders have durability, flexibility, and resistance to abrasion and impact. They also provide excellent gloss and color retention. However, they may be more sensitive to moisture during the curing process. Alkyd binders provide a high gloss finish similar to epoxy and polyurethane. They have good adhesion properties and are resistant to moisture. However, they might not be as durable or chemical-resistant as epoxy or polyurethane. Polyester binders are durable and have good chemical resistance. They are also known for their excellent weatherability and gloss retention. However, they may not provide the same level of flexibility as epoxy or polyurethane. Sol-gel binders have a hybrid nature, combining both inorganic and organic components. This characteristic may result in coatings with good adhesion, hardness, and resistance to environmental factors. In addition to these, other types of binders such as silicone, vinyl, and fluoropolymer binders may also be used, each with its own set of advantages and trade-offs. The choice of binder will depend on the specific requirements of the application, including the desired color vibrancy, durability, flexibility, chemical resistance, and environmental considerations.

The binder may include hardeners or cross-linking agents to enhance the durability and resistance of the coating, or plasticizers to increase its flexibility. In some cases, it could contain additives that improve its flow characteristics during application or that enhance its performance once it is cured, such as UV stabilizers or corrosion inhibitors.

One function of the binder within the coating is to act as a durable barrier. In the context of the present description, the binder may also enable the distinct color display of this fastening system by holding the colorant. Apart from adhering to the fastener body and holding the colorant, the binder also has a role in creating a protective barrier between the fastener and its environment. This barrier function limits the fastener's direct exposure to corrosive elements, thereby prolonging its operational lifespan and enhancing its resilience.

In the context of fasteners used in assembly with dissimilar metals, the coating can mitigate galvanic corrosion. This type of corrosion occurs when two different metals are in contact within an electrolyte-rich environment. One metal corrodes faster, serving as the anode, while the corrosion rate of the other metal, the cathode, slows down. The binder's barrier function helps in preventing direct contact between the fastener and the other metals in its assembly environment, thus reducing the risk associated with galvanic corrosion.

A further enhancement in the protective function against galvanic corrosion can be achieved through dielectric properties. Selecting dielectric or non-conductive materials as the binder in the coating can obstruct the flow of electrical current between different metals, offering an additional protection against galvanic corrosion.

The coating can be applied through various methods such as spraying or dipping, akin to paint application, thereby creating a tenacious layer on the fastener.

The colorant is a component within the coating that imparts color to the fasteners. The colorant can include pigments, dyes, and other substances capable of imparting color to the coating. Each group of fasteners of the present description has a distinct color represented by a set of CIE Lab coordinates (L, a, b). The CIE Lab color space, also known as CIELAB, is a color space defined by the International Commission on Illumination (CIE in French). It is a mathematical model describing the way colors can be represented as numbers or coordinates. Unlike other color models like RGB (red, green, blue) used in digital screens or CMYK (cyan, magenta, yellow, black) used in printing, the CIE Lab color space was designed to approximate human vision.

In the CIE Lab model, colors are described in terms of three coordinates: L*, a*, and b*. "L*" represents lightness and ranges from 0 (black) to 100 (white). "a*" represents the color's position between red/magenta and green. Positive values of a* are towards red/magenta, and negative values are towards green. "b*" represents the color's position between yellow and blue. Positive values of b* are towards yellow, and negative values are towards blue. This system is designed to be perceptually uniform. This means that a small change in a color value should correspond to approximately the same perceptual change regardless of the color you start from.

In the context of the fastening system of the present description, each group of fasteners has a color that is defined using a specific set of L*, a*, and b* coordinates within the CIE Lab color space such that each group of fasteners has a distinct color.

In some examples, the color difference between any two groups of fasteners, calculated using the CIEDE2000 color difference formula, is greater than a predetermined threshold value (T). Thus, there may be a minimum color difference between any two groups of fastener of the plurality of groups of fasteners such that there is high level of distinctiveness between the colors of each group of fasteners. The CIEDE2000 color difference formula introduces a quantitative way of defining the distinctiveness of different colors. The specific color difference formula, CIEDE2000, is used to calculate the perceptual difference between the colors of any two groups of fasteners, and the present description can set a minimum threshold for that difference.

CIEDE2000 is a color-difference formula developed by the International Commission on Illumination (CIE). This formula is built on the CIE Lab color space and provides a representation of perceptual color differences. The CIEDE2000 formula takes into account complex factors including the nonlinearity in the relationship between color coordinates and perceived color differences, and the effect of spatial surroundings on color perception. The output is a single number, ΔE, which represents the perceived difference between two colors.

In the context of the fastening system of the present description, the CIEDE2000 formula is used to calculate the color difference (ΔE) between the colors of any two groups of fasteners, that difference is greater than a specific minimum threshold value (T).

The value for T is preferably 3.0, more preferably 5.0, more preferably 10.0, more preferably 20.0, more preferably 30.0, more preferably 45.0. This indicates a range of preferred values for the minimum perceptual color difference, ΔE, between any two groups of fasteners, as calculated by the CIEDE2000 formula. The preference of increasing ΔE is to ensure that the color difference is not just noticeable, but very clear.

The colors of each group of fasteners have a vibrancy represented by a chroma value (C) greater than a predetermined minimum chroma threshold (CT) in the CIE LCH color space, wherein the chroma value (C) is calculated using the formula C = sqrt(a² + b²), where a and b are the CIE Lab coordinates of the color. The fastening system preferably includes another condition for the colors of the groups of fasteners: the colors may have a certain minimum level of vibrancy, which is represented by a chroma value in the CIE LCH color space.

Chroma, in the CIE LCH (Lightness, Chroma, Hue) color space, is a measure of the colorfulness of a color. Colors with high chroma values appear more vibrant, while colors with low chroma values are less vibrant or more muted. The CIE LCH color space is related to the CIE Lab color space, and the chroma value can be calculated from the a* and b* coordinates in Lab using the formula provided: C = sqrt(a² + b²).

In the context of the fastening system of the present description, each group of fasteners has a color with a chroma value (C) greater than a predetermined minimum chroma threshold (CT). This ensures that the colors of the fasteners are not just distinct from each other, but also vibrant enough to be readily noticeable and distinguishable, even in varied lighting conditions and to observers with different color perception abilities.

The value for the minimum chroma threshold (CT) is at least 40, preferably at least 60, and more preferably at least 80. Thus, the present description provides a range of preferred minimum values for the chroma threshold (CT) of the colors of the groups of fasteners. The minimum chroma threshold may be set to ensure that the colors used for the fasteners are not just differentiable, but also vibrant and clearly noticeable. This is beneficial in aiding visual identification and minimizing potential confusion. In the context of the fastening system, specifying a minimum chroma value can help in distinguishing different fastener types more easily, or in identifying them in low light or at a distance, for instance.

To achieve the distinct and vibrant colors for the coatings of the present description, colorants, such as pigments or dyes, are selected and then incorporated into the binder. The following is an exemplary process. Firstly, a color scheme is decided on for the groups of fasteners. Each group has a distinct color, and these colors are easily distinguishable from one another having a minimum perceptual color difference, ΔE, between any two groups of fasteners, as calculated by the CIEDE2000 formula. Consideration may also be given to ensuring the colors have the required level of vibrancy, as defined by the chroma threshold. Once a color scheme is chosen, the appropriate colorants are selected. These could include pigments, dyes, or any other substances capable of imparting the desired color to the coating. Pigments and dyes have different properties, and it may be desirable to use a combination of these to achieve the desired color. Pigments are insoluble color particles that are suspended in the binder. They are generally more resistant to light and heat, and often provide good coverage and color saturation. Dyes, on the other hand, are soluble in the binder and tend to offer bright, intense colors. They can often offer a broader range of hues. In selecting the colorants, they should be chosen to be compatible with the binder and with the fastener material. They should also be capable of withstanding the environmental conditions to which the fasteners will be exposed. In some cases, it may be desirable to select colorants that are resistant to specific environmental factors, such as UV light or corrosive substances. Once the colorants are selected, they may be mixed with the binder to create the coating. The precise amount of each colorant used will depend on the specific colorant and the desired color. In order to ensure that the colors of the different groups of fasteners are both consistently distinct, the color of the coating for each group should be carefully controlled. This could involve testing samples of the coating using a spectrophotometer or other color measurement device to determine its CIE Lab coordinates and ensure they match the desired values. The color difference and chroma value for each group can then be calculated and compared to the predetermined threshold values. Finally, the coating may be applied to the fasteners. This could involve a number of different techniques, including spraying, dipping, or brushing, depending on the type of the fasteners and the specific properties of the coating. By following this process, fasteners with distinct, vibrant colors can be created that are easily distinguishable from one another. This facilitates the identification of fasteners, especially in complex assembly processes such as aircraft construction.

To illustrate an application of this disclosure, consider a hypothetical scenario during assembly involving four groups of machine screws, each with distinct structural characteristics but similar appearances that could lead to potential confusion.

The first group of machine screws may have a pan head, a Phillips drive, and are made from 316 Stainless Steel. These screws are 3/4 inches (1.9 cm) long and known for their superior corrosion resistance, especially against chloride environments. These screws could be coated with a bright pink color represented in LAB color space with values of (80, 60, -10).

The second group of machine screws may have a button head, a Phillips drive, and are made from A286 Stainless Steel, a high strength, corrosion-resistant alloy used in high temperature and high-pressure applications. Despite the similar drive style, the button head and the different alloy set these screws apart. Measuring 1 inch (2.5 cm) in length, these screws could be distinguished by a vivid green coating, with LAB color values of (70, -60, 60).

The third group of machine screws may have a flat head, a Torx drive, and are composed of 6AL-4V Titanium, a material with an excellent strength-to-weight ratio and superior corrosion resistance. Their length is 1 1/4 inches (3.2 cm). They could be coated with a deep purple color, distinguishable by LAB color values of (40, 50, -50).

The fourth group of machine screws could feature a round head and a Torx drive, just like the third group. However, these screws, measuring 1 1/2 inches (3.8 cm), are made from 7075 Aluminum, a high-strength material commonly used in aircraft structures. The screws from this group could be coated in a sunny yellow color to distinguish them from the others, with LAB color values of (90, -10, 80).

Given the subtle differences in the head style, length, and material of the screws in these four groups, the fastening system of the present description may be useful for ensuring correct usage.

Colorants used in the coatings of the present description include any conventional colorants. Colorants can generally be classified into two main categories: dyes and pigments. Both serve the purpose of imparting color, but they differ in their chemical structures, solubility, and the way they interact with light and other substances. Dyes are usually organic compounds that are soluble in their application medium. They have a molecular structure that can absorb certain wavelengths of light and reflect others, producing the perception of color. Dyes can produce vibrant and intense colors. Pigments are insoluble particles that are dispersed or suspended in the binder. They can be organic or inorganic, with inorganic pigments typically being more stable and resistant to environmental conditions. Pigments work by absorbing certain wavelengths of light and reflecting others, similar to dyes, but because they are particulate in nature, they also scatter light, which can affect the apparent color and brightness. In the context of the present description, both dyes and pigments could be used as colorants. Suitable dyes might include, for example, azo dyes, anthraquinoned dyes, or triphenylmethane dyes. Suitable pigments might include, for example, titanium dioxide, iron oxides, chromium oxides, phthalocyanine pigments, quinacridone pigments, or isoindolinone pigments.

The coatings of the present description may additionally include metal pigments, such as aluminum pigments, e.g., aluminum flakes. Functionally, aluminum flakes can contribute to the protective properties of a coating. For example, the flakes may align parallel to the substrate surface when applied, forming a physical barrier that can help shield the fastener from environmental damage. This barrier can enhance the coating's overall resistance to factors like moisture, UV radiation, and chemical exposure, thus providing additional protection against corrosion and wear. In the context of galvanic corrosion, the aluminum flakes may also be beneficial if the fasteners are used in assembly with aluminum structures. They could help to minimize the potential for galvanic corrosion by reducing the difference in electrode potential between the fastener and the assembly structure, particularly if the fasteners are not made of aluminum. In terms of aesthetics, aluminum pigments can give a metallic or shimmering effect to the coating, enhancing its appearance. The presence of aluminum pigments can be advantageous in the context of the present description to further aid in distinguishing between different groups of fasteners.

Indeed, aluminum pigments are utilized in various coating applications for their ability to provide a metallic sheen or luster, and these pigments can aid in distinguishing between different groups of fasteners.

Typically, aluminum pigments are thin platelets of aluminum which reflect light, giving a metallic appearance. In some examples, the color or appearance of these pigments can be modified by applying a thin coating of another material to the surface of the aluminum platelets.

When these coated aluminum pigments or other metal pigments are incorporated into the coating of a fastener, they can impart a unique color or visual effect to the fastener, aiding in its distinction. For instance, aluminum pigments coated with a thin layer of titanium dioxide may provide a pearlescent effect, reflecting light in a unique way to give an iridescent, multi-color appearance. This could help distinguish a group of fasteners from others that use uncoated aluminum pigments or different coatings. In another scenario, aluminum pigments might be coated with a transparent dye or pigment that imparts a specific color. Depending on the colorant used, these pigments could create a wide array of effects, from subtle color shifts to vivid, easily distinguishable hues. This method of differentiation could provide additional flexibility and options in a color-coding system for fasteners, facilitating easy identification and reducing the likelihood of assembly errors. In other examples, the coating can be devoid of any metal pigments in the coating.

An optional feature of the coating applied to the fasteners includes the capacity for luminescence, where the binder incorporates specific dyes or pigments that have luminescent properties. Luminescence refers to the emission of light from a material that has absorbed photons. The types of luminescence that can be applied to fastener coatings in the present context include phosphorescence and fluorescence. Phosphorescence involves the absorption of light energy and the slow release of that energy as visible light over an extended period. Phosphorescent pigments, once energized under light, can glow in the dark for hours. This 'afterglow' effect might be beneficial for distinguishing fasteners even in the absence of an immediate light source. Fluorescence, on the other hand, involves the absorption of light and the immediate re-emission of that light. Fluorescent pigments glow under ultraviolet light and cease their emission once the light source is removed. This 'instant glow' effect can be useful in conditions where ultraviolet light is available, offering a different means to distinguish between groups of fasteners. Photoluminescence, a broader term that encompasses both phosphorescence and fluorescence, refers to any process where a substance absorbs photons and then re-emits photons. Photoluminescent pigments may provide either phosphorescent or fluorescent effects, depending on their specific chemical composition and structure.

In other examples, the coatings presented in this description can utilize pigments, notably aluminum pigments, that have been pre-coated with a surface layer of at least one of a colored material and a luminescent material, such as phosphorescent and fluorescent materials, before being integrated into a binder system to formulate the final coating. Rather than modifying the binder with dyes or introducing distinct colored or luminescent pigments, this approach simply pre-coats the conventional aluminum or other pigments to achieve the desired color or luminescence. This method maintains any inherent qualities attributed to the pigments, such as serving as barriers against environmental harm and resisting galvanic corrosion. By prioritizing the alteration of pre-existing pigment particles over the direct addition of new colorants, the compounding process becomes more streamlined. This also reduces the chance of complex chemical interactions and may bolster the stability of the coating. Significantly, this method can obviate the need to adjust the chemical properties of a traditional binder, a beneficial trait when the binder's stability and consistency are prioritized.

Pigments, including aluminum, can be subjected to various pre-coating processes that adhere colorants or luminescent materials to their surfaces. The colorants or luminescent materials can be adhered to the pigments by any suitable method. Once coated, these pigments can then be integrated into binder systems. Leveraging pre-coated pigments ensures that the resulting coating retains any attributes of the pigment while also manifesting the desired color or luminescence properties.

The luminescence feature of the coatings can significantly enhance the ease of identification and sorting of fasteners, particularly in environments with low or variable light conditions. This is achieved by offering an additional layer of differentiation between fastener groups. When the binder incorporates luminescent pigments or dyes, the fasteners do not rely solely on ambient light to be distinguishable. Instead, their identification becomes a dynamic process that can adapt to changing lighting conditions.

In a brightly lit environment, the fasteners may be primarily distinguished by their inherent color. However, as light levels decrease, the luminescent properties become more prominent. In a low-light or no-light scenario, phosphorescent pigments can maintain a steady, glowing differentiation for a prolonged period. This allows fasteners to remain distinguishable even in the dark. Alternatively, in environments where ultraviolet light is available, fluorescent pigments can offer a vibrant and immediate differentiation. These fasteners would appear to 'light up' under UV light, creating a stark contrast that aids in their identification.

The luminescent feature of the coatings on the fasteners could be tailored to specific use cases, with each group of fasteners potentially possessing a unique set of luminescent properties. For instance, a first group of fasteners might be identified by a first luminescent property, while a second group might be identified by a second luminescent property, different from the first. Various features of the luminescent property can be varied between groups of fasteners, allowing for a wide range of distinct identifications. Some of these properties may include:
Glow intensity: The intensity of the luminescent glow could vary between fastener groups. Some groups might exhibit a strong, bright glow, while others might present a more subtle luminescence.
Duration of glow: The glow duration, particularly in the case of phosphorescent pigments, could be another differentiating factor. One group of fasteners might continue glowing for an extended period after light exposure, while another group's glow could fade more rapidly.
Color of glow: Different colors could be achieved by selection of different pigments. Fastener groups could be differentiated based on the color of their luminescent glow.
Response to different wavelengths: Fastener groups could also be differentiated based on their response to different wavelengths of light. For example, one group of fasteners might fluoresce brightly under UV light, while another group might only fluoresce under specific wavelengths of visible light.

The present disclosure also encompasses an assembled structure, comprised of various components held together by the plurality of groups of fasteners as described herein.

The assembled structure includes numerous components, which can represent diverse parts of a larger system, such as parts of a vehicle, a building, an appliance, a machine, or any other structure that requires the assembly of individual parts. These components may be made from a variety of materials, including but not limited to metals, plastics, composites, ceramics, or any combination thereof.

These components are secured together within the assembled structure by multiple groups of fasteners. Each group consists of multiple identical fasteners, where each fastener includes a fastener body and a coating applied to at least a portion of the fastener body. The coating contains a binder and a colorant, as described in the previous paragraphs.

Each group of fasteners within the assembled structure is distinct in that it possesses a unique structural characteristic that sets it apart from the other groups. This could refer to differences in fastener dimensions, shapes, thread profiles, drive types, head types, material compositions, or any other physical or functional attribute.

Furthermore, each group of fasteners is represented by a distinct color, which can be described by a unique set of CIE Lab coordinates (L, a, b). This allows for an efficient and reliable method of distinguishing between different groups of fasteners within the assembled structure, which can facilitate installation, maintenance, and quality control processes.

With this system, the assembled structure can benefit from the use of fasteners that are not only functionally suitable for their specific roles, but are also visually distinct for easy identification and differentiation. This can result in increased efficiency and accuracy in the assembly process, as well as enhanced maintainability and traceability in the long term.

One additional challenge faced during the assembly of structures composed of different metallic components is the potential for galvanic corrosion. Galvanic corrosion can occur when two different metals, or alloys, are in electrical contact in an electrolyte, such as water, where the more noble metal corrodes the less noble one. This is especially a concern when fasteners composed of one type of metal interact with structural components of a different metal.

The coating applied to the fasteners in the present description serves an important role in mitigating this potential problem by acting as a barrier between the fastener and the metallic components of the assembled structure. This barrier reduces the direct metal-to-metal contact, thereby significantly minimizing the potential for galvanic corrosion.

This barrier function is important when the fasteners are used in environments where exposure to moisture, salty conditions, or other corrosive substances is a concern. The combination of the coating's materials, including the binder and colorant, as well as potential additives, like corrosion inhibitors, enhance the coating's ability to resist such corrosive environments and protect the integrity of the fastener and the assembled structure.

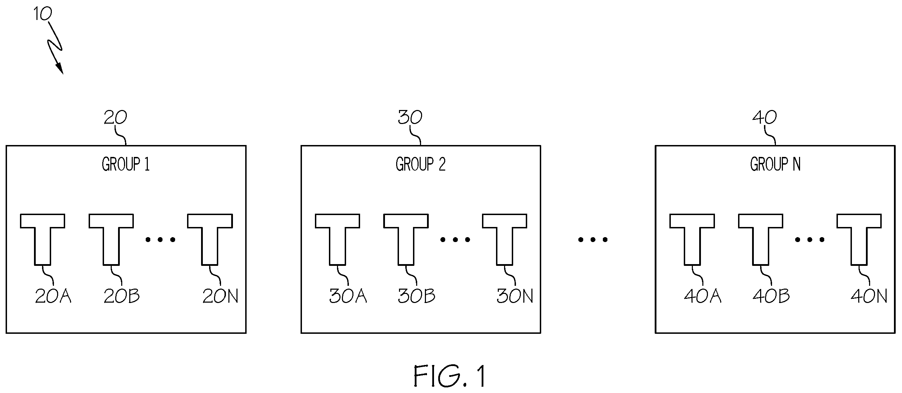

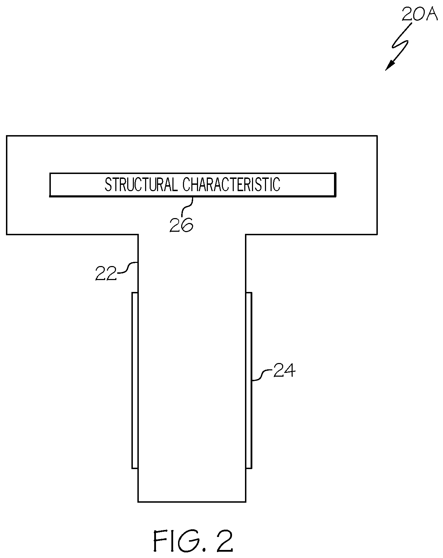

Figs. 1 and 2 are illustrations of an exemplary fastening system of the present description. The fastening system 10 includes groups of fasteners, 20, 30, 40 each fastener comprising: a fastener body 22 and a coating 24 applied to at least a portion of the fastener body 22, the coating 24 comprising a binder and a colorant. Group 20 can represent, for example, a set of stainless steel hex-head bolts. Each bolt 20A, 20B, 20N in this group 20 features a coating, which has a first color represented by a set of CIE Lab coordinates (L, a, b). The stainless steel composition of the fasteners in group 20 imparts specific characteristics, such as high strength and corrosion resistance. Group 30 can represent, for example, a set of titanium hex-head bolts. Each bolt 30A, 30B, 30N in this group 30 features a coating, which has a second color represented by a set of CIE Lab coordinates (L, a, b). The titanium composition of the fasteners in group 30 imparts other characteristics, such as lighter weight and higher strength-to-weight ratio compared to the stainless steel fasteners of group 20. Group 40 can represent, for example, a set of aluminum hex-head bolts. Each bolt 40A, 40B, 40N in this group 40 features a coating, which has a third color represented by a set of CIE Lab coordinates (L, a, b). Despite the structural similarity of the bolts in groups 20, 30, and 40, the distinctively different color coatings visually differentiate between each group. This distinction is useful for selecting the appropriate fasteners for various applications within an assembled structure, considering the specific properties imparted by the different compositions of the fasteners.

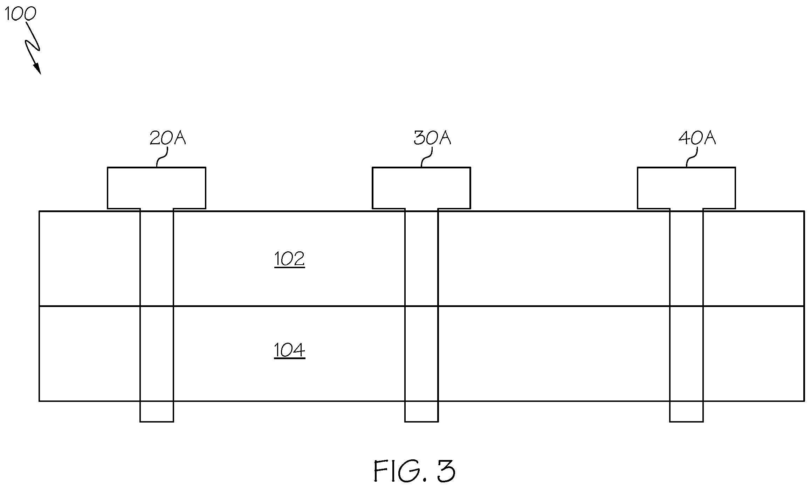

Fig. 3 is an illustration of an exemplary assembled structure of the present description. The assembled structure 100 is comprised of a plurality of components 102, 104, secured together using fasteners 20A, 30A, 40A from groups 20, 30 40. The components could represent any structural elements used in various applications, such as parts of an automobile, an aircraft, a building, or a machine. Each fastener within its respective group has the same structural characteristics and color. As the fasteners 20A, 20B, 20C from groups 20, 30, 40 have different compositions (e.g., stainless steel, titanium, aluminum, respectively), they offer different properties suitable for the components they secure. Coatings on these fasteners not only help to distinguish between the two groups but may also act as a barrier between the fasteners and the components they secure, mitigating the potential for galvanic corrosion. Thus, the assembled structure 100 demonstrates an exemplary application of the fastening system where the use of distinctly colored fasteners facilitates accurate, efficient assembly.

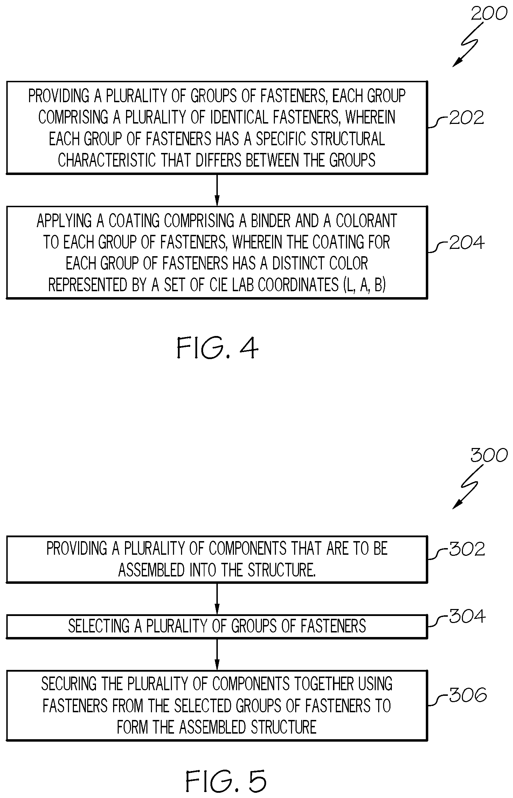

Figure 4 is a flow diagram illustrating an exemplary method (200) for producing a fastening system, according to an example of the present disclosure. The method comprises the following steps:
Step 202: Providing a plurality of groups of fasteners, wherein each group comprises a plurality of identical fasteners. Each group of fasteners has a specific structural characteristic that differs between the groups.
Step 204: Applying a coating comprising a binder and a colorant to each group of fasteners. Importantly, the coating for each group of fasteners has a distinct color represented by a set of CIE Lab coordinates (L, a, b).

These steps may be performed sequentially or concurrently, depending on the manufacturing process. The method allows for the creation of a fastening system with visually distinct groups of fasteners, where each group has unique structural characteristics and a corresponding distinct color coating.

By following this method, the resulting fastening system provides both functional and aesthetic advantages, allowing for easy identification and differentiation of fastener groups within an assembled structure.

Figure 5 is a flow diagram illustrating an exemplary method (300) for assembling a structure, according to an example of the present disclosure. The method comprises the following steps:
Step 302: Providing a plurality of components that are to be assembled into the structure.
Step 304: Selecting a plurality of groups of fasteners. Each group consists of identical fasteners, and each group of fasteners has a specific structural characteristic that differs between the groups. Importantly, each group of fasteners also has a distinct color, represented by a set of CIE Lab coordinates (L, a, b).
Step 306: Securing the plurality of components together using fasteners from the selected groups of fasteners to form the assembled structure.

These steps may be performed sequentially or concurrently, starting with the provision of components, followed by the selection of fasteners, and finally, the assembly of the structure using the selected fasteners. This method allows for an organized assembly process with easily identifiable fasteners, ensuring the use of the correct fastener during assembly.

As explained above, the fasteners of the fastening systems and associated assembled structures of the present description may be of various types have coatings applied to at least a portion of the bodies thereof, in which the coatings may comprise binder and various types of colorants, such as pigments, and dyes, and other substances.

Some examples also relate an improved design of a fastener (400), which may be utilized with the above-described fastening systems and associated assembled structures and methods or may be utilized as a standalone fastener design.

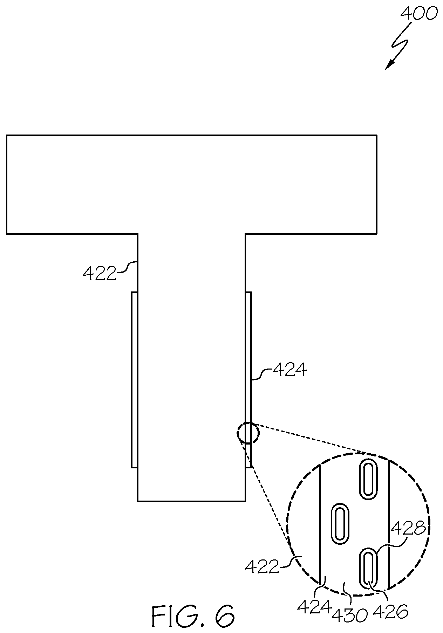

Figure 6 illustrates an exemplary fastener (400), which includes a fastener body (422) and a coating (424) applied to at least a portion of the fastener body (422), the coating (424) including: a pigment (426) having a surface layer (428) of at least one of a colored material and a luminescent material and a binder (430).

The fastener body (422) may be of various types suitable for a wide range of applications, particularly in the context of aircraft assembly and maintenance. This can include but is not limited to bolts, screws, nuts, rivets, washers, and pins, amongst others, as previously described.

The pigment (426) may be of various types suitable for different purposes. For instance, the pigment (426) could be a metal pigment such as an aluminum pigment, e.g., aluminum flakes, or it could be a non-metal pigment. Functionally, aluminum flakes can contribute to the protective properties of a coating. For example, the flakes may align parallel to the substrate surface when applied, forming a physical barrier that can help shield the fastener from environmental damage. This barrier can enhance the coating's overall resistance to factors like moisture, UV radiation, and chemical exposure, thus providing additional protection against corrosion and wear. In the context of galvanic corrosion, the aluminum flakes may also be beneficial if the fasteners are used in assembly with aluminum structures. They could help to minimize the potential for galvanic corrosion by reducing the difference in electrode potential between the fastener and the assembly structure, particularly if the fasteners are not made of aluminum. In terms of aesthetics, aluminum pigments can give a reflective effect to the coating, enhancing its visibility.

The surface layer (428) on the pigment (426) comprises a colored material, a luminescent material, or a combination of both.

The colored material in the surface layer (428) serves to impart the desired specific color to the coating (424). This can serve the functional purposes as previously describe to differentiate between different fasteners. The color can be used as a visual indicator to assist workers in quickly identifying the correct fastener for a specific application. The choice of the colored material is not restrictive; any appropriate substance can be chosen as long as it can be applied to the pigment as a surface layer.

The luminescent material in the surface layer (428) can have various applications and benefits. Luminescent materials can absorb light and then re-emit it, which can make the fastener (400) visible in low-light conditions. This is especially beneficial in environments where lighting conditions can be variable or poor, such as during aircraft maintenance.

Luminescent materials can be categorized into two main types: fluorescent materials and phosphorescent materials. Fluorescent materials absorb light and re-emit it almost instantaneously, while phosphorescent materials can store the absorbed light energy and re-emit it over a longer duration, even after the light source has been removed. Depending on the application, either fluorescent or phosphorescent materials, or a combination of both, can be used in the surface layer (428) of the pigment (426). The choice of the luminescent material is not restrictive; any appropriate substance can be chosen as long as it can be applied to the pigment as a surface layer.

Elaborating on the surface layer (428), its constituents can vary based on the desired functionality. The colored material can be derived from organic or inorganic compounds. These compounds can be chosen based on their color intensity, resistance to environmental factors, and compatibility with the underlying pigment. As for luminescent materials, as described above, they can be fluorescent or phosphorescent in nature. These materials may be made up of specialized compounds or substances that exhibit luminescence upon excitation.

The process for applying the surface layer (428) to the pigment (426) can be approached in a variety of ways, depending on the nature of the colored or luminescent materials. Factors to consider when determining the appropriate application method include the solubility of the material, its chemical reactivity, adherence properties, temperature stability, and the desired thickness and uniformity of the surface layer. Moreover, the physical form of the material, whether it is in a liquid, solid, or gaseous state, can influence the application technique.

The binder (430) serves a role as the component that physically adheres to the fastener body and may impart other properties to the coating such as durability, flexibility, and corrosion resistance. It also acts as the matrix that holds the pigment (426) and other potential ingredients together and allows them to be applied uniformly onto the fastener body. The binder (430) may be of various types offering their own benefits. This can include epoxy-based binders, acrylic binders, polyurethane binders, alkyd binders, polyester binders, sol-gel binders, silicone binders, vinyl binders, and fluoropolymer binders, amongst others, as previously described. The binder may include other components, such as hardeners or cross-linking agents to enhance the durability and resistance of the coating, or plasticizers to increase its flexibility. In some cases, it could contain additives that improve its flow characteristics during application or that enhance its performance once it is cured, such as UV stabilizers or corrosion inhibitors.

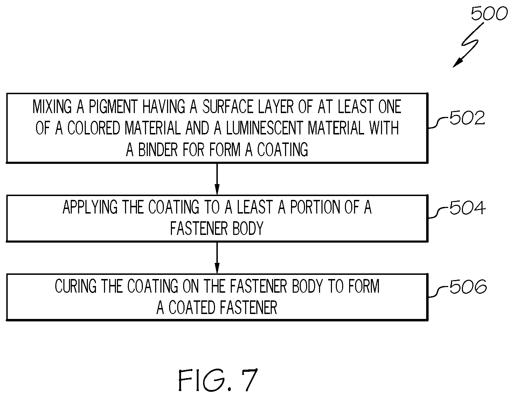

Figure 7 is a flow diagram representing a method (500) for manufacturing a fastener. The method includes, at step (502) mixing a pigment having a surface layer of at least one of a colored material and a luminescent material with a binder to form a coating, at step (504) applying the coating to at least a portion of a fastener body, and at step (506) curing the coating on the fastener body to form a coated fastener.

During the mixing (502) step, the pigment with its surface layer of colored material and/or luminescent material is distributed throughout the binder. Factors to consider during the mixing process include the viscosity of the binder, the concentration and type of the pigment, and the desired final properties of the coating. Agitation methods, such as mechanical stirring or ultrasonic dispersion, can be utilized to achieve a homogenous mixture.

The applying (504) step involves transferring the prepared coating onto the fastener body. Depending on the specific requirements and the nature of the coating, various application methods can be used. The choice of method will depend on factors like the desired coating thickness, the shape and size of the fastener body, and the physical characteristics of the coating mixture.

The curing (506) step involves solidifying and setting the applied coating to form a durable layer on the fastener body. The curing process can involve thermal treatment, where the coated fastener is subjected to specific temperatures to facilitate the hardening of the coating. In some instances, UV or infrared radiation can be used to initiate the curing process. The duration and intensity of the curing process will vary based on the composition of the coating and the desired final properties. Curing ensures that the coating adheres well to the fastener body and provides the intended functionalities, such as corrosion resistance, visual identification, or luminescence in low-light conditions.

The method may include one or more additional steps before, during or after the above-identified steps. For instance, the method may include preliminary step of preparing the surface layer of at least one of a colored material and a luminescent material to the pigment. During this preliminary step, the colored material and/or luminescent material can be applied to the pigment through various processes, the selection of which depends on the nature of the colored and/or luminescent material. As previously expressed, factors to consider when determining the appropriate application method include the solubility of the material, its chemical reactivity, adherence properties, temperature stability, the desired thickness and uniformity of the surface layer, and the physical form of the material.

Another potential step could be the pre-treatment of the fastener body before the application of the coating. This may involve cleaning, roughening, or priming the surface to enhance adhesion. Processes like sandblasting, acid etching, or the application of a primer layer can be utilized depending on the material and shape of the fastener body.

An intermediate step might be added between the application (504) and curing (506) steps. In this step, the applied coating may be allowed to dry for a certain duration. This drying process helps in the evaporation of solvents or any volatile components present in the coating mixture, which can help in the prevention of bubbles, defects, or inconsistencies in the final coating.

Post-curing treatments could also be incorporated to enhance the properties of the coated fastener. This may include additional treatments like sealing to provide added protection against environmental factors or interaction with the binder.

Furthermore, it is worth noting that while the above method focuses on the application of coatings with pigments that have colored or luminescent surface layers, other ingredients can also be introduced in the coating mixture. These could include, but are not limited to, anti-corrosion agents, UV stabilizers, texturizing agents, or flow modifiers, depending on the intended use of the fastener.

Various examples of the fastener and the method of its manufacture can offer a range of advantages.

Enhanced Differentiation and Identification: By incorporating colored materials in the surface layer of the pigment, fasteners can be easily differentiated. This color distinction simplifies the assembly process, improving the use the correct fasteners. Furthermore, it speeds up the identification process, resulting in reduced assembly times and associated labor costs.

Improved Low-light Visibility: The use of luminescent materials in the surface layer offers significant benefits, especially in environments with inconsistent or low-lighting conditions, such as aircraft maintenance hangers. Whether using fluorescent or phosphorescent materials, this luminescence ensures that the fasteners can be easily spotted and identified.

Protection & Durability: The surface layer, combined with the underlying pigment (like aluminum flakes), forms a protective barrier. This dual-layered protection boosts the coating's resistance to environmental factors such as moisture, UV radiation, and chemicals, significantly enhancing the fastener's lifespan and reducing maintenance or replacement costs.

Versatility & Customization: The method offers versatility as different colored and luminescent materials can be selectively applied to the pigment's surface layer. This allows for customized solutions tailored to specific applications or industry requirements.

Reduced Galvanic Corrosion Risk: In instances where aluminum pigments are used, especially in conjunction with aluminum structures, the potential for galvanic corrosion is minimized, enhancing the overall lifespan and structural integrity of the assembly.

Broad Application Scope: The innovative fastener design and associated method cater to a vast array of industries beyond just aviation. Whether it is construction, automotive, or consumer electronics, the fundamental principle of providing visually distinct and functionally superior fasteners is universally beneficial.

Streamlined Manufacturing Process: The method detailed offers a structured approach to fastener production, with clear steps that can be adapted or expanded upon depending on specific needs.

Efficient Color Adaptation: One of the features of fastener and method is the ease with which different colored coatings can be produced. Instead of developing entirely new coating chemistries for each color variant, manufacturers can simply modify the surface layer of the pigment. This modular approach can significantly reduce research and development efforts, lead times, and associated costs when introducing new colored fasteners to the market.

The present application is limited only by the scope of the claims.

Further examples are set out below.

The present disclosure also provides a method for producing a fastening system, the method comprising the steps of: providing a plurality of groups of fasteners, each group comprising a plurality of identical fasteners, wherein each group of fasteners has a specific structural characteristic that differs between the groups; and applying a coating comprising a binder and a colorant to each group of fasteners, wherein the coating for each group of fasteners has a distinct color represented by a set of CIE Lab coordinates (L, a, b).

The colorant may be a pigment having a surface layer of at least one of a colored material and a luminescent material.

The present disclosure also provides an embodiment wherein the assembled structure has a color difference ΔE between any two groups of fasteners, calculated using a CIEDE2000 color difference formula, is greater than a predetermined threshold value (T), where T is 3.0.

A color difference ΔE between any two groups of fasteners, calculated using a CIEDE2000 color difference formula, may be greater than a predetermined threshold value (T), where T is 5.0.

A color difference ΔE between any two groups of fasteners, calculated using a CIEDE2000 color difference formula, may be greater than a predetermined threshold value (T), where T is 10.0.

A color difference ΔE between any two groups of fasteners, calculated using a CIEDE2000 color difference formula, may be greater than a predetermined threshold value (T), where T is 20.0.

A color difference ΔE between any two groups of fasteners, calculated using a CIEDE2000 color difference formula, may be greater than a predetermined threshold value (T), where T is 30.0.

A color difference ΔE between any two groups of fasteners, calculated using a CIEDE2000 color difference formula, may be greater than a predetermined threshold value (T), where T is 45.0.

The colors of each group of fasteners may have a vibrancy represented by a chroma value (C) greater than a predetermined minimum chroma threshold (CT) in a CIE LCH color space, wherein the chroma value (C) is calculated using formula C = sqrt(a² + b²), where a and b are the CIE Lab coordinates of the color, wherein CT is 40.

The colors of each group of fasteners may have a vibrancy represented by a chroma value (C) greater than a predetermined minimum chroma threshold (CT) in a CIE LCH color space, wherein the chroma value (C) is calculated using formula C = sqrt(a² + b²), where a and b are the CIE Lab coordinates of the color, wherein CT is 60.

The colors of each group of fasteners may have a vibrancy represented by a chroma value (C) greater than a predetermined minimum chroma threshold (CT) in a CIE LCH color space, wherein the chroma value (C) is calculated using formula C = sqrt(a² + b²), where a and b are the CIE Lab coordinates of the color, wherein CT is 80.

The coating applied to at least a portion of the fastener body may comprise at least one of dyes and pigments that have luminescent properties.

The luminescent properties may include at least one of phosphorescence and fluorescence.

The coating for each group of fasteners may have a distinct set of luminescent properties.

The colorant may have a pigment having a surface layer of at least one of a colored material and a luminescent material.

The present disclosure also provides a fastener comprising: a fastener body; and a coating applied to at least a portion of the fastener body, the coating comprising: a pigment having a surface layer of at least one of a colored material and a luminescent material; and a binder.

The fastener body may be selected from the group consisting of bolts, screws, nuts, rivets, washers, and pins.

The binder may comprise at least one selected from the group consisting of: epoxy-based binders, acrylic binders, polyurethane binders, alkyd binders, polyester binders, sol-gel binders, silicone binders, vinyl binders, and fluoropolymer binders.

The pigment may be an aluminum pigment.

The surface layer may comprise a colored material.

The surface layer may comprise a luminescent material.

The luminescent material may comprise a fluorescent material.

The luminescent material may comprise a phosphorescent material.

The present disclosure also provides a method for manufacturing a fastener, the method comprising: mixing a pigment having a surface layer of at least one of a colored material and a luminescent material with a binder to form a coating; applying the coating to at least a portion of a fastener body; and curing the coating on the fastener body to form a coated fastener.

The binder in the mixing step may be selected from the group consisting of: epoxy-based binders, acrylic binders, polyurethane binders, alkyd binders, polyester binders, sol-gel binders, silicone binders, vinyl binders, and fluoropolymer binders.

The pigment used in the mixing may be an aluminum pigment.

The surface layer on the pigment may comprise a colored material.

The surface layer on the pigment may comprise a luminescent material.

The luminescent material may comprise a fluorescent material.

The luminescent material may comprise a phosphorescent material.

The method may further comprise selecting a fastener body from the group consisting of bolts, screws, nuts, rivets, washers, and pins before applying the coating.

## Claims

1. A fastening system (10), comprising:
a plurality of groups (20, 30, 40) of fasteners, each group (20, 30, 40) comprising a plurality of identical fasteners (20A, 20B, 20N, 30A, 30B, 30N, 40A, 40B, 40N), each fastener (20A) comprising: a fastener body (22); and a coating (24) applied to at least a portion of the fastener body (22), the coating (24) comprising a binder and a colorant,
wherein each group (20, 30, 40) of fasteners has a specific structural characteristic (26) that differs between the groups (20, 30, 40),
wherein each group (20, 30, 40) of fasteners has a distinct color represented by a set of CIE Lab coordinates (L, a, b), and
wherein the colors of each group (20, 30, 40) of fasteners have a vibrancy represented by a chroma value (C) greater than a predetermined minimum chroma threshold (CT) in a CIE LCH color space, wherein the chroma value (C) is calculated using formula C = sqrt(a² + b²), where a and b are the CIE Lab coordinates of the color, wherein CT is 40.

2. The fastening system (10) of Claim 1, wherein a color difference ΔE between any two groups (20, 30, 40) of fasteners, calculated using a CIEDE2000 color difference formula, is greater than a predetermined threshold value (T), where T is 3.0, preferably T is 5.0.

3. The fastening system (10) of Claim 1, wherein the coating (24) further comprises metal pigments, preferably aluminum pigments.

4. The fastening system (10) of Claim 1, wherein a color difference ΔE between any two groups (20, 30, 40) of fasteners, calculated using a CIEDE2000 color difference formula, is greater than a predetermined threshold value (T), where T is 10.0.

5. The fastening system (10) of Claim 1, wherein a color difference ΔE between any two groups (20, 30, 40) of fasteners, calculated using a CIEDE2000 color difference formula, is greater than a predetermined threshold value (T), where T is 20.0.

6. The fastening system (10) of Claim 1, wherein a color difference ΔE between any two groups (20, 30, 40) of fasteners, calculated using a CIEDE2000 color difference formula, is greater than a predetermined threshold value (T), where T is 30.0.

7. The fastening system (10) of Claim 1, wherein a color difference ΔE between any two groups (20, 30, 40) of fasteners, calculated using a CIEDE2000 color difference formula, is greater than a predetermined threshold value (T), where T is 45.0.

8. The fastening system (10) of any of Claims 1 to 7, wherein the colors of each group (20, 30, 40) of fasteners have a vibrancy represented by a chroma value (C) greater than a predetermined minimum chroma threshold (CT) in a CIE LCH color space, wherein the chroma value (C) is calculated using formula C = sqrt(a² + b²), where a and b are the CIE Lab coordinates of the color, wherein CT is 60 or 80.

9. The fastening system (10) of any of Claims 1 to 8, wherein the coating (24) applied to at least a portion of the fastener body (22) comprises dyes and/or pigments that have luminescent properties.

10. The fastening system (10) of Claim 9, wherein the luminescent properties include at least one of phosphorescence and fluorescence.

11. The fastening system (10) of Claim 9 or 10, wherein the coating (24) for each group of fasteners has a distinct set of luminescent properties.

12. The fastening system (10) of any of Claims 1 to 11, wherein the colorant is a pigment having a surface layer of at least one of a colored material and a luminescent material.

13. An assembled structure (100), comprising
a plurality of components (102, 104); and
the fastening system (10) of any of Claims 1 to 12, wherein
the plurality of groups (20, 30, 40) of fasteners secure the plurality of components (102, 104) together within the assembled structure (100).

14. An aircraft comprising the assembled structure (100) of Claim 13.

15. A method (300) for assembling a structure (100) comprising a plurality of components (102, 104) and the fastening system (10) of any of Claims 1 to 12, the method comprising:
securing (306) the plurality of components (102, 104) together using fasteners from the plurality of groups (20, 30,40) of fasteners to form the assembled structure (100).

## Patentansprüche

1. Befestigungssystem (10), umfassend:
eine Vielzahl von Gruppen (20, 30, 40) von Befestigungselementen, wobei jede Gruppe (20, 30, 40) eine Vielzahl identischer Befestigungselemente (20A, 20B, 20N, 30A, 30B, 30N, 40A, 40B, 40N) umfasst, wobei jedes Befestigungselement (20A) Folgendes umfasst: einen Befestigungskörper (22); und eine Beschichtung (24), die auf mindestens einen Teil des Befestigungskörpers (22) aufgebracht ist, wobei die Beschichtung (24) ein Bindemittel und ein Farbmittel umfasst,
wobei jede Gruppe (20, 30, 40) von Befestigungselementen ein spezifisches Strukturcharakteristikum (26) aufweist, das sich zwischen den Gruppen (20, 30, 40) unterscheidet,
wobei jede Gruppe (20, 30, 40) von Befestigungselementen eine eigene distinkte Farbe aufweist, die durch einen Satz von CIE-Lab-Koordinaten (L, a, b) dargestellt wird, und
wobei die Farben jeder Gruppe (20, 30, 40) von Befestigungselementen eine Leuchtkraft aufweisen, die durch einen Chroma-Wert (C) größer als ein vorbestimmter minimaler Chroma-Schwellenwert (CT) in einem CIE-LCH-Farbraum dargestellt wird, wobei der Chroma-Wert (C) berechnet wird unter Verwendung der Formel C = sqrt(a² + b²), wobei a und b die CIE Lab-Koordinaten der Farbe sind, wobei CT 40 beträgt.

2. Befestigungssystem (10) nach Anspruch 1, wobei ein Farbunterschied ΔE zwischen zwei beliebigen Gruppen (20, 30, 40) von Befestigungselementen, berechnet unter Verwendung einer CIEDE2000-Farbunterschiedformel, größer als ein vorbestimmter Schwellenwert (T) ist, wobei T 3,0 beträgt und T vorzugsweise 5,0 beträgt.

3. Befestigungssystem (10) nach Anspruch 1, wobei die Beschichtung (24) weiter Metallpigmente, vorzugsweise Aluminiumpigmente, umfasst.

4. Befestigungssystem (10) nach Anspruch 1, wobei ein Farbunterschied ΔE zwischen zwei beliebigen Gruppen (20, 30, 40) von Befestigungselementen, berechnet unter Verwendung einer CIEDE2000-Farbunterschiedformel, größer als ein vorbestimmter Schwellenwert (T) ist, wobei T 10,0 beträgt.

5. Befestigungssystem (10) nach Anspruch 1, wobei ein Farbunterschied ΔE zwischen zwei beliebigen Gruppen (20, 30, 40) von Befestigungselementen, berechnet unter Verwendung einer CIEDE2000-Farbunterschiedformel, größer als ein vorbestimmter Schwellenwert (T) ist, wobei T 20,0 beträgt.

6. Befestigungssystem (10) nach Anspruch 1, wobei ein Farbunterschied ΔE zwischen zwei beliebigen Gruppen (20, 30, 40) von Befestigungselementen, berechnet unter Verwendung einer CIEDE2000-Farbunterschiedformel, größer als ein vorbestimmter Schwellenwert (T) ist, wobei T 30,0 beträgt.

7. Befestigungssystem (10) nach Anspruch 1, wobei ein Farbunterschied ΔE zwischen zwei beliebigen Gruppen (20, 30, 40) von Befestigungselementen, berechnet unter Verwendung einer CIEDE2000-Farbunterschiedformel, größer als ein vorbestimmter Schwellenwert (T) ist, wobei T 45,0 beträgt.

8. Befestigungssystem (10) nach einem der Ansprüche 1 bis 7, wobei die Farben jeder Gruppe (20, 30, 40) von Befestigungselementen eine Leuchtkraft aufweisen, die durch einen Chroma-Wert (C) größer als ein vorbestimmter minimaler Chroma-Schwellenwert (CT) in einem CIE-LCH-Farbraum dargestellt wird, wobei der Chroma-Wert (C) berechnet wird unter Verwendung der Formel C = sqrt(a²+ b²), wobei a und b die CIE Lab-Koordinaten der Farbe sind, wobei CT 60 oder 80 beträgt.

9. Befestigungssystem (10) nach einem der Ansprüche 1 bis 8, wobei die auf mindestens einen Teil des Befestigungskörpers (22) aufgebrachte Beschichtung (24) Farbstoffe und/oder Pigmente umfasst, die lumineszente Eigenschaften aufweisen.

10. Befestigungssystem (10) nach Anspruch 9, wobei die lumineszenten Eigenschaften mindestens eines von Phosphoreszenz und/oder Fluoreszenz einschließen.

11. Befestigungssystem (10) nach Anspruch 9 oder 10, wobei die Beschichtung (24) für jede Gruppe von Befestigungselementen einen distinkten Satz von lumineszenten Eigenschaften aufweist.

12. Befestigungssystem (10) nach einem der Ansprüche 1 bis 11, wobei das Farbmittel ein Pigment mit einer Oberflächenschicht aus mindestens einem von einem farbigen Material und einem lumineszenten Material ist.

13. Zusammengebaute Struktur (100), umfassend
eine Vielzahl von Komponenten (102, 104); und
das Befestigungssystem (10) nach einem der Ansprüche 1 bis 12, wobei
die Vielzahl von Gruppen (20, 30, 40) von Befestigungselementen die Vielzahl von Komponenten (102, 104) innerhalb der zusammengebauten Struktur (100) aneinander sichern.

14. Luftfahrzeug, umfassend die zusammengebaute Struktur (100) nach Anspruch 13.

15. Verfahren (300) zum Zusammenbauen einer Struktur (100), die eine Vielzahl von Komponenten (102, 104) und das Befestigungssystem (10) nach einem der Ansprüche 1 bis 12 umfasst, wobei das Verfahren Folgendes umfasst:
aneinander Sichern (306) der Vielzahl von Komponenten (102, 104) unter Verwendung von Befestigungselementen aus der Vielzahl von Gruppen (20, 30, 40) von Befestigungselementen, um die zusammengebaute Struktur (100) zu bilden.

## Revendications

1. Système de fixation (10), comprenant :
une pluralité de groupes (20, 30, 40) de fixations, chaque groupe (20, 30, 40) comprenant une pluralité de fixations identiques (20A, 20B, 20N, 30A, 30B, 30N, 40A, 40B, 40N), chaque fixation (20A) comprenant : un corps de fixation (22) ; et un revêtement (24) appliqué à au moins une partie du corps de fixation (22), le revêtement (24) comprenant un liant et un colorant,
dans lequel chaque groupe (20, 30, 40) de fixations présente une caractéristique structurelle spécifique (26) qui diffère entre les groupes (20, 30, 40),
dans lequel chaque groupe (20, 30, 40) de fixations présente une couleur distincte représentée par un ensemble de coordonnées CIE Lab (L, a, b), et
dans lequel les couleurs de chaque groupe (20, 30, 40) de fixations présentent une vivacité représentée par une valeur de chrominance (C) supérieure à un seuil de chrominance minimal prédéterminé (CT) dans l'espace colorimétrique CIE LCH, dans lequel la valeur de chrominance (C) est calculée à l'aide de la formule C = √(a² + b²), dans laquelle a et b sont les coordonnées CIE Lab de la couleur, et dans lequel CT est égal à 40.

2. Système de fixation (10) selon la revendication 1, dans lequel une différence de couleur ΔE entre deux groupes quelconques (20, 30, 40) de fixations, calculée à l'aide d'une formule de différence de couleur CIEDE2000, est supérieure à une valeur seuil prédéterminée (T), dans lequel T est égal à 3,0, de préférence T est égal à 5,0.

3. Système de fixation (10) selon la revendication 1, dans lequel le revêtement (24) comprend en outre des pigments métalliques, de préférence des pigments d'aluminium.

4. Système de fixation (10) selon la revendication 1, dans lequel une différence de couleur ΔE entre deux groupes quelconques (20, 30, 40) de fixations, calculée à l'aide d'une formule de différence de couleur CIEDE2000, est supérieure à une valeur seuil prédéterminée (T), dans lequel T est égal à 10,0.

5. Système de fixation (10) selon la revendication 1, dans lequel une différence de couleur ΔE entre deux groupes quelconques (20, 30, 40) de fixations, calculée à l'aide d'une formule de différence de couleur CIEDE2000, est supérieure à une valeur seuil prédéterminée (T), dans lequel T est égal à 20,0.

6. Système de fixation (10) selon la revendication 1, dans lequel une différence de couleur ΔE entre deux groupes quelconques (20, 30, 40) de fixations, calculée à l'aide d'une formule de différence de couleur CIEDE2000, est supérieure à une valeur seuil prédéterminée (T), dans lequel T est égal à 30,0.

7. Système de fixation (10) selon la revendication 1, dans lequel une différence de couleur ΔE entre deux groupes quelconques (20, 30, 40) de fixations, calculée à l'aide d'une formule de différence de couleur CIEDE2000, est supérieure à une valeur seuil prédéterminée (T), dans lequel T est égal à 45,0.

8. Système de fixation (10) selon l'une quelconque des revendications 1 à 7, dans lequel les couleurs de chaque groupe (20, 30, 40) de fixations présentent une vivacité représentée par une valeur de chrominance (C) supérieure à un seuil de chrominance minimal prédéterminé (CT) dans un espace colorimétrique CIE LCH, dans lequel la valeur de chrominance (C) est calculée à l'aide de la formule C = √(a² + b²), dans laquelle a et b sont les coordonnées CIE Lab de la couleur, dans lequel CT est égal à 60 ou 80.

9. Système de fixation (10) selon l'une quelconque des revendications 1 à 8, dans lequel le revêtement (24) appliqué à au moins une partie du corps de fixation (22) comprend des colorants et/ou des pigments aux propriétés luminescentes.

10. Système de fixation (10) selon la revendication 9, dans lequel les propriétés luminescentes incluent au moins une phosphorescence et une fluorescence.

11. Système de fixation (10) selon la revendication 9 ou 10, dans lequel le revêtement (24) de chaque groupe de fixations présente un ensemble distinct de propriétés luminescentes.

12. Système de fixation (10) selon l'une quelconque des revendications 1 à 11, dans lequel le colorant est un pigment présentant une couche de surface d'au moins un matériau coloré et un matériau luminescent.

13. Structure assemblée (100), comprenant
une pluralité de composants (102, 104) ; et
le système de fixation (10) selon l'une quelconque des revendications 1 à 12, dans lequel
la pluralité de groupes (20, 30, 40) de fixations fixent la pluralité de composants (102, 104) ensemble au sein de la structure assemblée (100).

14. Aéronef comprenant la structure assemblée (100) selon la revendication 13.

15. Procédé (300) d'assemblage d'une structure (100) comprenant une pluralité de composants (102, 104) et le système de fixation (10) selon l'une quelconque des revendications 1 à 12, le procédé comprenant :
la fixation (306) de la pluralité de composants (102, 104) ensemble à l'aide de fixations provenant de la pluralité de groupes (20, 30, 40) de fixations pour former la structure assemblée (100).
